# EUROPÄISCHE PATENTSCHRIFT

(11) **EP 2 118 646 B1**
(45) Veröffentlichungstag und Bekanntmachung des Hinweises auf die Patenterteilung: **27.06.2012**
(21) Anmeldenummer: 08707134.6
(22) Anmeldetag: 19.01.2008
(51) Int. Cl.: G01N 30/60, B01D 15/22

(54) **UMMANTELUNG FÜR MONOLITHISCHE CHROMATOGRAPHIESÄULEN**
CASING FOR MONOLITHIC CHROMATOGRAPHY COLUMNS
ENVELOPPE POUR COLONNES CHROMATOGRAPHIQUES MONOLITHIQUES

(30) Priorität: 16.02.2007 DE 102007008360
(43) Veröffentlichungstag der Anmeldung: 18.11.2009
(73) Patentinhaber: Merck Patent GmbH, 64293 Darmstadt (DE)
(72) Erfinder: CABRERA PEREZ, Karin, 63303 Dreieich (DE); KREHER, Klaus, 64839 Münster (DE); NEUROTH, Willi, 64380 Rossdorf (DE)
(86) Internationale Anmeldenummer: PCT/EP2008/000401
(87) Internationale Veröffentlichungsnummer: WO 2008/098659

(56) Entgegenhaltungen:
- EP-A- 0 881 057
- EP-B- 1 194 201
- WO-A-01/77660
- WO-A-2005/072164
- DE-A1- 4 106 631
- JP-A- 2007 064 725

## Beschreibung

Die vorliegenden Erfindung betrifft Ummantelungen von monolithischen Chromatographiesäulen, deren Herstellung und Verwendung.

Zur Herstellung konventioneller Chromatographiesäulen mit partikulären Sorbentien wird das Füllmaterial in ein Edelstahl- oder Kunststoffrohr mit passgenauen Enden gefüllt. Dabei wird erreicht, dass das Sorbensbett am Mantel der Säule dicht anliegt und die Partikel homogen über den gesamten Querschnitt der Säule verteilt sind.

Die neue Generation von Chromatographiesäulen besteht nun aus Silica-Monolithen, die über ein Sol-Gel-Verfahren für spezielle Trennprobleme mit einem maßgeschneiderten Porensystem hergestellt werden können. Um diese Monolithen für die Chromatographie einsetzen zu können, müssen sie in einem zweiten Schritt mit einem lösungsmittelresistenten und druckstabilen Material ummantelt werden.

Ersetzt man nun, wie es z.B. in WO 94/19 687 A und in WO 95/03 256 A offenbart ist, partikuläre durch solche monolithischen Sorbentien, so ergibt sich das Problem, die Ummantelung des Sorbens sowohl druckstabil als auch flüssigkeitsdicht auszuführen. Bei ihrer Herstellung können die monolithischen Sorbentien schrumpfen, so dass sie nicht in der ursprünglichen Form verbleiben können. Dieses trifft für beide Formen gleichermaßen zu, und zwar für die anorganischen als auch für die organischen Formkörper. Sie müssen daher nach der eigentlichen Herstellung mit einer neuen flüssigkeitsdichten und druckstabilen Ummantelung versehen werden. Nur so kann gewährleistet werden, dass Probe und Elutionsmittel ausschließlich durch das Sorbens transportiert werden.

Verschiedene Möglichkeiten zur flüssigkeitsdichten Ummantelung von monolithischen Sorbentien sind in DE 197 26 164 offenbart. Dazu gehört beispielsweise eine Ummantelung mit druckstabilen Kunststoffen wie z.B. PEEK (Polyetheretherketon) oder faserverstärktem PEEK. Versuche, monolithische Sorbentien mit derartigen Materialien zu ummanteln, zeigten jedoch, dass nicht alleine die mechanische Stabilität der Ummantelung ausschlaggebend ist.

Die Güte einer monolithischen Säule für die HPLC kann über die Trennleistung (N/m) einerseits und über die Peaksymmetrie andererseits beschrieben werden. Eine gute analytische Säule besitzt Trennleistungen von 70.000 -100.000 N/m. Die Peakform entspricht im Idealfall einer Gauss'schen Glockenform. Abweichungen von dieser symmetrischen Form führen zu einem "fronting" oder zu einem "tailing". Die inhärente Trennleistung des Säulenkörpers sowie die Peaksymmetrie sollte sich nach Ummantelung mit einem Polymer zum lösungsmitteldichten Abschluss im chromatographischen Anwendungstest nicht mehr ändern.

Bei ungeeigneten Ummantelungen liegt das Polymer nicht totvolumenarm an dem Säulenkörper an. Die Säule zeigt von Beginn an Vorpeaks oder zumindest ein "Peakfronting" infolge schnelleren Probedurchlaufs an der Grenzfläche Säulenkörper/ Polymer.

Ummantelungen mit ungeeigneten Polymeren können auch beim ersten chromatographischen Test noch gute Trennleistung und Peaksymmetrie liefern, aber bei weiterem Gebrauch zu einer Veränderung/ Verschlechterung der beiden Güteparameter führen.

Ein Phänomen ist die Zunahme des Peaktailings beim Lagern der Säule in der mobilen Phase (z.B. Lagerung in Acetonitril / Wasser, 60/40 für 4 Wochen) wegen der mikroporösen Struktur der Ummantelung. Ein weiteres Phänomen kann die Zunahme eines Peakfrontings bei gleichzeitiger Abnahme der Trennleistung wegen einer Geometrieveränderung der Ummantelung sein.

Bereits früher wurde angenommen, dass diese ungünstigen Phänomene durch die natürlichen Schrumpfungs- und Schwindungseigenschaften von Polymeren einerseits und durch die Quelleigenschaften in Lösungsmitteln andererseits hervorgerufen werden. Besonders problematisch ist die Ummantelung starrer, spröder anorganischer Formkörper, z.B. aus Kieselgel. Da das Polymer (beispielsweise PEEK) bei hohen Verarbeitungstemperaturen auf den Formkörper aufgeschmolzen wird, haftet es zunächst fest darauf. Beim Abkühlen des Polymers kommt es zu "Bewegungen" (Schrumpfen bzw. Schwinden) des Polymers, während der Formkörper starr in seiner Dimension bleibt. Dabei kommt es zum Aufbau von Spannungen. Kommt das Polymer nun in Berührung mit Lösungsmitteln, adsorbiert es diese und quillt. Hierbei werden die aufgebauten Spannungen in Längs- und Querrichtung abgebaut. Als Folge kommt es zu kleinen Zerstörungen des porösen Kieselgelkörpers an der Grenzfläche. Das Polymer, welches auf dem Kieselgel fest haftet, verursacht durch seine Eigenbewegung das Entstehen von Löchern durch "Mitnahme" von Kieselgel an der Grenzfläche. Hieraus resultiert eine Abnahme der Trennleistung, im extremen Fall ein starkes Peakfronting.

Eine Zunahme von Peaktailing lässt sich auch durch eine Mikroporenstruktur in der Polymerummantelung erklären, durch die es zu unkontrollierten zusätzlichen Diffusionsvorgängen während des Chromatographieprozesses kommt.

In EP 0 990 153 A wird versucht, dieses Problems zu lösen, indem Rohre mit einem geeigneten Querschnitt aus einem faserverstärkten PEEK (Polyetheretherketon) hergestellt werden, in die Monolithen gesteckt werden. Durch eine Nachbehandlung in einem Ofen bei Temperaturen im Bereich von 350 bis 400 °C wird das faserverstärkte PEEK aufgeschmolzen und liegt anschließend direkt auf der Oberfläche des ummantelten Monolithen.

In der Anwendung der so hergestellten ummantelten, monolithischen Chromatographiesäulen zeigen sich jedoch immer wieder Probleme mit der Peaksymmetrie (Tailing und Fronting), sodass weiterhin das oben beschriebene Problem ungelöst bleibt.

Es wird inzwischen angenommen, dass während der Hitzebehandlung zum Aufschmelzen der Ummantelung, wie in EP 0 990 153 A beschrieben, PEEK in die offene Struktur der porösen Monolithen "fließt". Da das PEEK eine andere chemische Struktur und andere physikalische Eigenschaften besitzt als der modifizierte Kieselgelmonolith, während letzterer die Hauptmasse des hergestellten Produkts ausmacht, wird davon ausgegangen, dass dieses u. a. eine Ursache für das unerwünschte Verhalten ist. Durch das "Einfließen" in die offene Struktur der Randbereiche ergeben sich während der Anwendung nicht spezifische Wechselwirkungszentren, welche vom PEEK herrühren und mit dem Analyten in Berührung kommen. In Abhängigkeit von der chemischen Struktur des Analyten führt dieses in einigen Fällen zu Peaktailing oder - fronting.

Weiterhin entsteht während der Ummantelung zwischen dem Monolithen und dem PEEK eine sehr starke Haftung, so dass nach dem Ummantelungsprozess die beiden Materialien nicht mehr getrennt werden können. Auch scheint es so, als wenn sich nach dem Aufschmelzen des PEEKs während des Abkühlens Spannungen in der Randpartie aufbauen, die zu "Cracks" und Totvolumina in der Grenzfläche führen und ein Fronting hervorrufen können.

Darüber hinaus wird die PEEK-Ummantelung bei einer Ofen-Temperatur von etwa 400 °C auf die Monilithen aufgeschmolzen. Diese Temperatur liegt ca. 55 °C deutlich über dem Schmelzpunkt von PEEK (ca. 340 °C). Diese Temperaturbedingungen wirken sich nachteilig auf Monolithen aus, die nach der RP-Oberfächenderivatisierung (RP = reversed phase) C18-Ketten enthalten. Diese Oberflächenderivatisierung ist bis zu einer Temperatur von etwa 200 °C stabil. Bei höheren Temperaturen werden die C-18-Ketten vermehrt abgebrannt, und es entstehen vermehrt Silanolgruppen an der Oberfläche der Kieselgel-Monolithen. Insbesondere bei Trennungen basischer Verbindungen verursachen Silanolgruppen ein Tailing.

Aufgabe der vorliegenden Erfindung ist es daher, totvolumenarm Ummantelungen zur Verfügung zu stellen, welche nach der Fertigstellung der ummantelten monolithischen Chromatographiesäulen in der Anwendung weder zu "Peakfronting" noch Tailing führen. Aufgabe der vorliegenden Erfindung ist es somit auch, sowohl ein geeignetes Polymermaterial als auch ein Verfahren zur Ummantelung von Monolithen zur Verfügung zu stellen, welches sich nicht nachteilig auf die Eigenschaften der monolithischen Chromatographiesäulen auswirkt.

Erfindungsgemäß wird die Aufgabe gelöst durch einen monolithischen Formkörper, der mit einem thermoplastischen Kunststoff totvolumenarm ummantelt ist, wobei die Ummantelung Polyphenylensulfid enthält. Insbesondere erfolgt die Lösung der erfindungsgemäßen Aufgabe durch monolithische Formkörper, die mit einem faserverstärkten, thermoplastischen Kunststoff totvolumenarm ummantelt sind. Zur Herstellung der Ummantelung hat sich insbesondere mit Fasern verstärktes Polyphenylensulfid als besonders geeignet erwiesen.

Es hat sich gezeigt, dass die erfindungsgemäß ummantelten monolithischen Formkörper besonders gute Eigenschaften besitzen, wenn zur Herstellung der Ummantelung ein Kunststoff verwendet wird, der im geschmolzenen Zustand eine Viskosität Zwischen 100 und 180 ml/ 10 min nach MVR-Methode aufweist. Dieses gilt sowohl für faserverstärte als auch für nicht faserverstärkte Ummantelungen. Durch Versuche wurde gefunden, dass diese Anforderung insbesondere durch Polyphenylensulfid erfüllt wird.

Zur Faserverstärkung der Kunststoffummantelung haben sich Kohlefasern als besonders geeignet erwiesen. Somit sind ummantelte monolithische Formkörper, die mit einem durch Kohlefasern verstärktem Kunststoff ummantelt sind, Gegenstand der vorliegenden Anmeldung.

Besonders gute Eigenschaften weisen entsprechende mit faserverstärkten Kunststoffen ummantelten monolithischen Formkörper als Chromatographiesäulen auf.

Das erfindungsgemäße Verfahren zur Herstellung eines ummantelten monolithischen Formkörpers wie beschrieben, erfolgt durch folgende Schritte:
a) Polyphenylensulfid-Granulat wird mit Kohlefasern in einer Menge von 1 bis 50 Gew.-% versetzt und mittels Spritzgussvorrichtungen zu einem Rohr, Schlauch oder Halbschalen mit geringfügig größeren Innendurchmessern geformt;
b) der zu ummantelnde Formkörper wird in das Rohr, den Schlauch oder in zwei Halbschalen eingebracht,
c) das Rohr, die Halbschalen oder der Schlauch wird durch Aufschmelzen und Andrücken oder Aufziehen schlüssig mit der Oberfläche des Formkörpers verbunden.

Gegenstand der vorliegenden Erfindung ist ebenfalls die Verwendung eines entsprechenden mit faserverstärktem Kunststoff ummantelten monolithischen Formkörpers zur chromatographischen Auftrennung mindestens zweier Stoffe.

Versuche mit verschiedensten Polymermaterialien und Anwendungstests zeigten, dass sich insbesondere mit solchen Polymeren Produkte mit verbesserten Eigenschaften herstellen lassen, die beim Aufschmelzen niedrige Viskositäten aufweisen.

Idealerweise erfüllt eine Ummantelung für monolithische Sorbentien die folgenden Anforderungen und ist:
- lösungsmittelstabil gegenüber in der Chromatographie gebräuchlichen Lösungsmitteln, wie z.B. Acetonitril, MeOH, Wasser, Dioxan, Heptan usw., da die mobile Phase aus einem oder mehreren dieser Komponenten besteht.
- mechanisch stabil, um bei höheren Flussraten ohne Probleme schneller chromatographieren zu können. Bei höheren Flussraten baut sich ein Rückdruck innerhalb der Säule auf. Das Polymer sollte auch bei einem Rückdruck von bis zu 200 bar seine Geometrie nicht verändern.
- eine totvolumenarme Auflage auf dem monolithischen Säulenkörper, um Trennleistungsverluste und ein Fronting der Substanz-Peaks bzw. Vorpeaks durch unkontrollierte Eluentenströme an der Grenzfläche Polymer-Säulenkörper zu vermeiden.
- porenfrei, um ein nachteiliges Tailing der Substanz-Peaks durch unkontrollierte Diffusionsvorgänge in Mikroporen der Ummantelung zu vermeiden.

Es wurde gefunden, dass insbesondere die Viskosität der zur Ummantelung verwendeten Polymere von großer Bedeutung ist, um eine totvolumenarme Auflage auf monolithischen Formkörpern zu erzielen. Eine geeignete mechanische Stabilität der Ummantelung lässt sich durch Faserverstärkung mit geeigneten, mit dem Polymer kompatiblen Fasern erreichen. Versuche haben in diesem Zusammenhang gezeigt, dass sich geeignete Polymere mit niedriger Viskosität zu Ummantelungen mit der erforderlichen chemischen und mechanischen Stabilität verarbeiten lassen, wenn sie mit Fasern verstärkt sind, die mit dem Polymer kompatibel sind und sich gemeinsam mit dem Polymer möglichst totvolumenfrei auf die Monolithen aufbringen lassen.

Es ist zwar möglich, unter Verwendung verschiedenster, im geschmolzenen Zustand niedrigviskoser Polymere faserverstärkte Ummantelungen für monolithische Chromatographiesäulen herzustellen, die zu Beginn gute Eigenschaften aufweisen, jedoch hat es sich gezeigt, dass nur sehr wenige den hohen Anforderungen für die vorliegende Aufgabenstellung gerecht werden.

Durch Versuche wurde gefunden, dass insbesondere durch Verwendung von Polyphenylensulfid Ummantelungen hergestellt werden können, die in einem geeigneten Verfahren nahezu totvolumenfrei auf die Oberfläche des Monolithen aufgebracht werden können, so dass die ursprünglichen Eigenschaften der ummantelten Chromatographiesäule nahezu unverändert erhalten bleiben.

Auch kann durch Verwendung von entsprechenden Kunststoffrohren aus faserverstärktem PPS (= Polyphenylensulfid) als Ummantelungen das Problem des Frontings und Tailings weitgehend minimiert werden.

Erfindungsgemäß sind insbesondere Kunststoffrohre geeignet, die aus einem hochtemperaturbeständigen thermoplastischen PPS hergestellt sind. Bei diesem Kunststoff handelt es sich um ein Polymer mit der allgemeinen Formel (SC₆H₄)ₙ. Im allgemeinen wird PPS technisch durch Polykondensation von 1.4-Dichlorbenzol mit Natriumsulfid hergestellt und besitzt teilkristalline Eigenschaften, weshalb es bei der Verarbeitung geschmolzen werden muss. Dieses PPS besitzt infolge seiner Struktur geeignetere Eigenschaften für die Herstellung von Kunststoffummantelungen für monolithische Chromatographiesäiulen als beispielsweise das in EP 0 990 153 A verwendete PEEK (Polyetheretherketon). Insbesondere zeichnet sich das verwendete PPS beispielsweise im Vergleich zu PEEK durch folgende Eigenschaften aus:
- kürzere Repeat Units, 1/3 kürzer
- höheren kristallinen Anteil, ca. 80%
- die gespritzten Rohre sind deshalb glänzend
- PPS zeigt "flushing"-Effekt, d.h. es fließt sehr stark
- PPS ist relativ niedermolekular
- PPS besitzt eher niedrigere Viskosität

Es wurde jedoch gefunden, dass bereits eine Ummantelung, bestehend aus dem reinen Kunststoff die Anforderungen bezüglich Trennleistung und Peaksymmetrie schon erfüllt. Allerdings haben weitere Versuche gezeigt, dass sich die Anforderungen hinsichtlich mechanischer Stabilität noch verbessern lassen, wenn man mit faserverstärkten Kunststoffrohren arbeitet.

Daher wird zur Herstellung der Kunststoffummantelungen faserverstärktes PPS verwendet, das vorab zu Rohren mit geeignetem Querschnitt geformt wird. Obwohl der Zusatz von verschiedensten Fasern verbesserte Eigenschaften erzeugt, wird bevorzugt mit Kohlefasern verstärktes PPS eingesetzt, da solche Fasern mit diesem Kunststoff hervorragend kompatibel sind und in der gewünschten Verwendung zu totvolumenarmen, flüssigkeitsresistenten und druckstabilen Ummantelung verarbeiten lassen, welche den hohen chemischen und insbesondere hohen mechanischen Anforderungen standhalten.

In diesem Zusammenhang bedeutet erfindungsgemäß totvolumenarme Ummantelung, dass das Totvolumen zwischen monolithischem Formkörper und der Ummantelung so gering ist, dass es keinen negativen Einfluss auf die Trennleistung der Chromatographiesäule ausübt.

Mit der erfindungsgemäßen Ummantelung können organische und anorganische Formkörper oder auch anorganisch-organische Hybrid-Formkörper ummantelt werden, wie sie z.B. als Sorbentien für chromatographische Zwecke eingesetzt werden. Für chromatographische Auftrennungen können die Formkörper mit Separationseffektoren modifiziert sein, was aber im Allgemeinen keinen Einfluss auf ihre sonstigen Eigenschaften hat. Die erfindungsgemäße Ummantelung ist geeignet für starre, unflexible Formkörper. Auch spröde, anorganische Formkörper, wie sie in WO 94/19 687, WO 95/03 256 oder WO 98/29 350 offenbart sind, lassen sich erfindungsgemäß totvolumenarm ummanteln.

Diese Nachteile können, wie auch in EP 0 990 153 A beschrieben, an sich durch den Zusatz von Stabilisatoren, wie Fasermaterialien, anorganischen Materialien oder Pigmenten, z.B. Kreide, Talkum, Glimmer oder anorganische Oxide, wie Siliziumdioxid, beseitigt werden. Diese Zusätze führen auch zu einer mechanischen Stabilisierung der Ummantelung.

Erfindungsgemäß können die Nachteile insbesondere vermieden werden durch Verwendung von faserverstärktem PPS, das als Stabilisatoren Fasermaterialien, wie z.B. Glas- oder insbesondere Kohlefasern enthält. Die enthaltenen Fasern zeigen neben einer Reduktion der natürlichen Quell-Schwindungs- und Schrumpfungseigenschaften des Polymers eine besonders effektive Erhöhung der mechanischen Stabilität. Als ganz besonders für den erfindungsgemäßen Zweck hat sich durch Kohlefasern verstärktes PPS erwiesen, wobei jedoch auch die Menge der im Polymer enthaltenen Kohlefasern für die erzielbare Stabilität von großer Bedeutung ist.

Je mehr Fasern dem Kunststoff als Stabilisatoren zugesetzt werden, umso spröder wird er. Es hat sich gezeigt, dass der erfindungsgemäß verwendete Kunststoff nur bis zu einem Anteil von bis zu 50 Gew.-% Fasern flexibel genug bleibt, um zu Ummantelungen von monolithischen Chromatographiesäulen verarbeitet zu werden. Ein vorteilhafter Einfluss auf die Eigenschaften der PPS-Ummantelung kann deutlich bereits durch die Zugabe von 1 Gew.-% Kohlefasern festgestellt werden. Es hat sich jedoch gezeigt, dass je weniger Fasern zugesetzt werden, umso stärker die Quell- bzw. Schrumpf- und Schwindungseigenschaften der Polymere hervortreten. Da gerade diese Eigenschaften durch den Faserzusatz vermieden werden sollen, ist es vorteilhaft, wenn im Polymer der Faseranteil bei mindestens 15 Gew.-% liegt. Bevorzugt werden daher Ummantelungen aus PPS mit einem Faseranteil von 15 - 35 Gew.-% hergestellt.

Insbesondere bevorzugt werden Ummantelungen aus PPS mit einem Faseranteil von 20 - 35 Gew.-% hergestellt, ganz besonders bevorzugt werden entsprechende Polymere mit einem Faseranteil von 27-33% verwendet.

Bei der Ummantelung von Formkörpern mit entsprechend faserverstärktem Kunststoffen wurde auch bei längerer Lagerung in Lösungsmitteln oder bei häufigem Gebrauch keine oder nur geringfügige Abnahme der Trennleistung beobachtet.

Für die effektive Herstellung eines mit faserverstärktem PPS ummantelten Formkörpers, muss die verwendete Kunststoffmasse im geschmolzenen Zustand eine bestimmte Viskosität aufweisen.

Bestimmt wird die Viskosität nach an sich bekannten Methoden.

Üblicherweise wird in der kunststoffverarbeitenden Industrie die Viskosität von Thermoplasten zumeist nach dem Volumenindex (MVR) nach DIN ISO 1133 bestimmt. Es wird in einer normierten Apparatur gearbeitet. Deren zentrale Bestandteile sind ein heizbarer, senkrecht stehender Zylinder (Innendurchmesser 9,55 mm) mit Austrittsdüse (Innendurchmesser 2,06 mm, Länge 8,00 mm) und ein passender Kolben mit (von der Apparatur lesbaren) Positionsmarkierungen (30,00 mm), der mit einem Gewicht belastet werden kann. Die Apparatur enthält präzise Meßsysteme zur Bestimmung der zurückgelegten Weglänge des Kolbens sowie zur Zeit- und Temperaturmessung.

Zur Bestimmung der Viskosität der Kunststoffe für eine erfindungsgemäße Säulenummantelung wurde ein an DIN ISO 1133 angelehntes Verfahren verwendet:

Zur Durchführung der Bestimmung wird die Apparatur auf eine festgelegte Temperatur von 320°C vorgeheizt. Der vorgetrocknete (150°C, 8h) Kunststoff bzw. Kunststoffcompound (10 g Pulver oder Granulat) wird in den Zylinder eingefüllt und verdichtet. Nach Erreichen der Messtemperatur (320°C) werden noch 240 s abgewartet. Anschließend wird das Gewicht (10 kg) automatisch aufgelegt und die Schmelze ausfließen lassen. Die Messungen beginnen, wenn die untere Positionsmarkierung auf dem Kolben erkannt wird, und enden, wenn die obere Markierung erkannt wird. Aus der zurückgelegten Weglänge des Kolbens, den Messzeitintervallen (2 s) sowie der bekannten Kolbenfläche wird nun der Volumenindex (MVR) über eine Gerätesoftware bestimmt und in der gebräuchlichen Einheit ml/10 min ausgegeben.

Die Vortrockenzeit und -temperatur (150°C, 8h), die Probenmasse (6 g), die Messtemperatur (320°C), das Gewicht (10 kg) und die Messzeitintervalle (2 s) sind Standards, die speziell auf die MVR Bestimmung von PPS und PPS-Compounds ausgerichtet wurden. Die Gerätegeometrie und die Wartezeit (240 s) sind in der DIN ISO 1133 festgelegt.

Kunststoffe weisen u.a. in Abhängigkeit ihres Vernetzungsgrades und ihrer Kettenlänge unterschiedliche Viskositäten auf. Durch einen Zusatz von Stabilisatoren, wie z.B. Fasern, wird die Viskosität der Stoffe nochmals verändert. Sie werden dadurch deutlich zäher, so dass diese Aspekte bei der Wahl einer erfindungsgemäß geeigneten PPS -Compositzusammensetzung berücksichtigt werden müssen.

Kunststoffe sind im allgemeinen als Granulat oder Pulver erhältlich. Für die erfindungsgemäße Ummantelung können beide Formen eingesetzt werden. Es muß jedoch beachtet werden, dass sich die Viskosität von Pulvern bei nachfolgenden Verarbeitungsschritten noch verändern kann, während das bei Granulaten zumeist nicht vorkommt. Ein Grund dafür ist, dass das Pulver häufig direkt aus dem Polymerisationsansatz stammt und noch einen Restanteil an Monomeren und Oligomeren enthalten kann. Während der Compoundierung gasen die Monomere aus und es kann eine Nachpolymerisation erfolgen. Dadurch erhöht sich die Viskosität der Kunststoffe leicht.

Es zeigte sich, dass der erfindungsgemäße Kunststoff insbesondere bei einem Zusatz von etwa 30 Gew.-% Fasern zur totvolumenarmen Ummantelung geeignet ist, wobei er eine Ausgangsviskosität von über 120 ml/ 10 min nach der MVR-Methode aufweist. Mit Fasern versetzte Kunststoffzusammensetzungen mit Werten unterhalb von 80 ml/ 10 min nach der MVR-Methode werden nach der Compoundierung so zäh, daß sie zwar noch zu Rohren extrudiert werden können, aber nur noch schlecht auf die Formkörper aufgebracht werden können. Die Obergrenze der gemessenen MVR-Werte der erfindungsgemäß einsetzbaren Kunststoffzusammensetzungen wird im wesentlichen durch Menge des zugesetzten PPS bestimmt. Allerdings sollten die Zusammensetzung beim Aufschmelzen auf den Formkörper nicht zu flüssig werden.

Bevorzugt wird daher pulverförmiges PPS mit einem MVR von 80 bis 210, besonders bevorzugt zwischen 100 und 180 verwendet. Bei Granulaten werden bevorzugt Materialien mit einem MVR von 80 bis 210, besonders bevorzugt von 100 bis 180 eingesetzt.

Zur erfindungsgemäßen Ummantelung der Formkörper werden die Kunststoffe zunächst compoundiert, d.h. sie werden mit Zusatzstoffen, wie z.B. Fasern, Farbkörpern, etc. versetzt. Dies erfolgt bevorzugt durch kontrollierte Zugabe der Zusatzstoffe bei gleichzeitiger Verarbeitung über eine Extruderschnecke. Genauere Prozeßparameter sind dem Fachmann bekannt und finden sich in Handbüchern, wie beispielsweise in Hensen, Knappe und Potente, "Handbuch der Kunststoffextrusionstechnik, Karl Hanse Verlag, (1986/1989).

Beim Compoundieren wird die spätere Viskosität des Kunststoffes durch die Art der zugegebenen Zusatzstoffe und teilweise auch den Zeitpunkt der Zugabe beeinflusst. Bei einer frühen Zugabe von Fasern werden diese während der Compoundierung zerkleinert. Beispielsweise können Fasern mit einer Ausgangslänge von 6 mm nach der Compoundierung nur noch eine durchschnittliche Länge von wenigen µm aufweisen. Für die erfindungsgemäße Ummantelung ist die Länge der zugesetzten Fasern von geringerer Bedeutung, da auch durch die nachfolgenden Verarbeitungsschritte eine Zerkleinerung der Fasern erfolgt. Daher wird der Faserzusatz zumeist früh zugegeben.

Typischerweise beträgt die Viskosität der erfindungsgemäß geeigneten faserverstärkten Kunststoffzusammensetzung nach der Compoundierung mit ca. 30 % Fasern zwischen 100 und 180 ml/10 min nach der MVR Methode, bevorzugt zwischen 100 und 150 ml/10 min nach MVR, wobei die Obergrenze wie schon bei den nicht faserverstärkten Ausgangsmaterialien hauptsächlich durch die Verfügbarkeit bestimmt wird.

Nach der Compoundierung werden aus der Materialmischung nach bekannten Verfahren, wie Extrusion oder Spritzguß Rohre hergestellt. Derartige Formgebungsverfahren sind bekannt und können beispielsweise Lehrbüchern, wie Knappe, Lampl und Heuel, "Kunststoffverarbeitung und Werkzeugbau" Karl Hanse Verlag (1992), entnommen werden. Bevorzugt erfolgt die Herstellung der Rohre im Spritzgussverfahren.

Anschließend wird der monolithische Formkörper in das Kunststoffrohr eingeführt. Durch Erwärmung wird das Rohr dann in möglichst engen Kontakt mit dem Formkörper gebracht. Dieser Schritt ist ausschlaggebend für eine totvolumenarme Ummantelung. Nur Materialien mit der erfindungsgemäß geeigneten Viskosität lassen sich ausreichend dicht an den Formkörper anfügen. Vorteilhaft ist in diesem Schritt die Verwendung von homogenen Rohren, die über ihre gesamte Länge eine gleichmäßige Wandstärke aufweisen.

Zur Durchführung dieses Herstellungsschritts sind dem Fachmann geeignete Verfahren bekannt, beispielsweise aus der Herstellung isolierter Kabel. Eine Möglichkeit, derartig ummantelte monolithische Sorbentien herzustellen, besteht z.B. darin, den Kunststoff auf den Formkörper aufzuextrudieren. Dabei wird parallel zur Extrusion eines Schlauches durch einen Querkopf der monolithische Formkörper zugeführt. Der frisch extrudierte, noch heiße Schlauch umschließt den Formkörper und wird, z.B. durch eine Andrückvorrichtung, zusätzlich an den Formkörper angedrückt. Es ist auch möglich, einen vorgeformten Schlauch zu erwärmen, statt einen Schlauch durch Extrusion zu erzeugen. Durch dieses mechanische Andrücken und das zusätzliche Sintern beim Abkühlen entsteht eine dichte Ummantelung. Es ist auch möglich, den Formkörper in einen vorgefertigten Schlauch einzubringen, dessen Innendurchmesser geringfügig größer ist als der Außendurchmesser des Formkörpers und dann den Kunststoff zu erwärmen, so dass der Schlauch auf den Enddurchmesser abgezogen werden kann und dabei den Formkörper dicht umschließt. Bevorzugt erfolgt die Herstellung der Ummantelung wie zuletzt beschrieben oder durch eine weitere Variante, wobei die Kunststoffummantelung im Spritzgussverfahren und durch ein- oder mehrfaches Aufschrumpfen erzeugt wird.

Zur Durchführung des Spritzgussverfahrens wird das PPS-Granulat beispielsweise mit 30 Gew.-% Kohlefaser versetzt und dem Spritzgussvorrichtungen zugeführt. Die resultierenden Materialien sind mechanisch stabil und resistent gegenüber den meisten Lösungsmitteln.

Vorteilhafter Weise hat das eingesetzte PPS einen Schmelzpunkt von ca. 285°C, der damit ca. 55°C unter dem Schmelzpunkt von PEEK liegt. Durch diesen niedrigen Schmelzpunkt wird ermöglicht, dass Oberflächenderivatisierungen der Monolithen, beispielsweise mit C18-Ketten, weniger beeinträchtigt werden.

Es ist auch möglich, Monolithen mit vorgefertigten faserverstärkten PPS-Halbschalen zu ummanteln. Das Aufbringen der Ummantelung erfolgt dabei durch teilweises Aufschmelzen und geeignetes Andrücken auf die Oberfläche der Monolithen.

Vorteilhafter Weise zeigen Monolithen, die mit PPS-Rohren bzw. Halbschalen ummantelt worden sind, nicht mehr das typische Fronting und "Knicktailing". Diese vorteilhaften Eigenschaften bleiben auch längerfristig erhalten, so dass davon ausgegangen werden kann, dass dieser Kunststoff als chromatographische Oberfläche nicht so zugänglich wie das in EP 0 990 153 A für diesen Zweck verwendete faserverstärkte PEEK. Im Gegensatz zu PEEK besitzt PPS einen hohen kristallinen Anteil (80% vs. 40-50% für PEEK).

Aufgrund der chemischen Struktur des PPSs ist dieser Kunststoff offenbar als chromatographische Oberfläche nicht so zugänglich wie das vorbeschriebene PEEK, so dass spezifische Wechselwirkungen zwischen dem aufzutrennenden Gemisch und der Kunststoffummantelung nicht so ins Gewicht fallen.

Es hat auch den Anschein, als ob im Vergleich zu PEEK-Ummantelungen beim Abkühlen der PPS-Ummantelung weniger Spannungen entstehen, die in Folge weniger "Cracks" bzw. und Totvolumina in der Randpartie hervorrufen. Hieraus resultiert ein deutlich minimiertes Fronting.

Die erfindungsgemäßen faserverstärkten Polymere sind insbesondere geeignet zur Herstellung von Polymerummantelungen für poröse Monolithen mit mono-, bi- oder multimodalen Porensystemen mit Makro- und Mesoporen, und mit Durchmessern von 1 mm bis 1 m, bevorzugt 1.5mm bis 50mm, bestehend aus SiO2, Hybrid-SiO2, Al2O3, TiO2 und anderen Metalloxiden.
Durch faserverstärtkte PPS-ummantelte monolithische Chromatographiesäulen mit besonders guten Eigenschaften werden insbesondere erhalten, wenn es sich um monolithische Säulen aus SiO2 oder Hybrid-SiO2 handelt. Erfindungsgemäß können aber auch entsprechende scheibenförmige präparative Monolithscheiben in erfindungsgemäßer Weise mit dem entsprechenden Kunststoff ummantelt werden. Bei dem verwendeten Kunststoff handelt es sich bevorzugt um einen geeigneten faserverstärkten Kunststoff.

Zur Verwendung als Chromatographiesäule können die erfindungsgemäß ummantelten Monolithen dann mit entsprechenden Anschlussstücken, Filtern, Dichtungen etc. versehen werden. Die Ummantelung kann plan mit dem Sorbens abschließen oder an den Enden überstehen. Derartige Konstruktionen sind für Chromatographiesäulen mit partikulären oder monolithischen Sorbentien bekannt.

Die erfindungsgemäß ummantelten monolithischen Sorbentien zeigen hervorragende Trenneigenschaften. Auch nach Lagerung in Lösungsmitteln und häufiger Benutzung zeigt sich keine oder nur geringfügige Verschlechterung der Trennleistungen. Somit gewährleistet die erfindungsgemäße Ummantelung erstmals die Herstellung von Chromatographiesäulen, die sowohl mechanisch und chemisch stabil sind, als auch totvolumenarm auf den monolithischen Formkörpern aufliegen.

Die vorliegende Beschreibung ermöglicht es dem Fachmann die Erfindung umfassend anzuwenden. Auch ohne weitere Ausführungen wird daher davon ausgegangen, dass ein Fachmann die obige Beschreibung im weitesten Umfang nutzen kann.

Bei etwaigen Unklarheiten versteht es sich von selbst, die zitierten Veröffentlichungen und Patentliteratur heranzuziehen. Dementsprechend gelten diese Dokumente als Teil der Offenbarung der vorliegenden Beschreibung.

Zum besseren Verständnis und zur Verdeutlichung der Erfindung werden im folgenden Beispiele gegeben, die im Rahmen des Schutzbereichs der vorliegenden Erfindung liegen. Diese Beispiele dienen auch zur Veranschaulichung möglicher Varianten. Aufgrund der allgemeinen Gültigkeit des beschriebenen Erfindungsprinzips sind die Beispiele jedoch nicht geeignet, den Schutzbereich der vorliegenden Anmeldung nur auf diese zu reduzieren.

Weiterhin versteht es sich für den Fachmann von selbst, dass sich sowohl in den gegebenen Beispielen als auch in der übrigen Beschreibung die in den Zusammensetzungen enthaltenen Komponentenmengen in der Summe immer nur zu 100 Gew.-% bezogen auf die Gesamtzusammensetzung aufaddieren und nicht darüber hinausgehen können, auch wenn sich aus den angegebenen Prozentbereichen höhere Werte ergeben könnten. Sofern nichts anderes angegeben ist, gelten %-Angaben als Gew.-%, mit Ausnahme von Verhältnissen, die in Volumenangaben wiedergegeben sind, wie beispielsweise Elutionsmittel, zu deren Herstellung Lösungsmittel in bestimmten Volumenverhältnissen im Gemisch verwendet werden.

Die in den Beispielen und der Beschreibung sowie in den Ansprüchen gegebenen Temperaturen gelten immer in °C.

### Beispiele

### Beispiel 1:

2 Silica Monolithen mit einem Durchmesser von 4,6mm und einer Länge von 12.5cm, hergestellt nach WO 94/19687 und WO 95/03256 (Nakanishi Patente), werden in einem Trockenschrank mind. 3 h bei 200°C vorgetrocknet. Anschließend werden die vorgetrockneten Si - Monolithen in faserverstärkten PPS-Rohre (11,5cm Länge, 5.0mm Innendurchmesser und 9mm Außendurchmesser) gelegt und mit einem Teflonschrumpfschlauch überzogen. (Die PPS-Rohre werden aus einem Granulat, das mit 30% Kohlefaser versetzt wird, spritzgusstechnisch gefertigt.) Die so versehenen Säulen werden auf einem Gestell montiert, in einen Ofen gegeben und 3-6 Minuten bei 380-400°C belassen. Anschließend werden die montierten Säulen aus dem Ofen geholt. Beim Abkühlen auf Raumtemperatur drückt der Teflonschrumpfschlauch das geschmolzene PPS totvolumenarm an den Monolithen. Die so ummantelten Säulen werden an beiden Enden gekürzt, auf eine Endlänge von 10 cm. An beide Säulenenden werden Gewinde geschnitten und passende Endfittings angeschraubt.

Untersuchungen an in dieser Weise hergestellten Produkten führten zu folgenden Ergebnissen:

Die Säulen wurden chromatographisch im Adsorptionssystem mit Heptan/ Dioxan (95/5;v/v) und 2-Nitroanisol untersucht. Es wurden folgende Trennleistungen und Peaksymmetrien erhalten

| | Trennleistung N/m | Peaksymmetrie Tusp |
|---|---|---|
| Säule 1 | 139730 | 0,97 |
| Säule 2 | 138540 | 0,85 |

### Beispiel 2:

2 Silica Monolithen mit einem Durchmesser von 4,6 mm und einer Länge von 10 cm werden nach dem unter Beispiel 1 beschriebenen Verfahren mit faserverstärktem PPS ummantelt. Anschließend werden sie on-column mit einer 20%igen Lösung von N,N-diethylamino dimethyl octadecylsilan in Toluol getränkt und im Durchfluss für 2 Stunden bei 50°C im Säulenofen derivatisiert. Die Säule wird dann on-column mit Toluol gewaschen und die on column Derivatiserung (jetzt endcapping) mit 100% Hexamethyldisilazan wiederholt. Die resultierende monolithische Säule wird erneut mit Toluol und 2-Propanol gewaschen und erhält so eine dem Fachmann bekannte RP-18e Oberflächenmodifizierung.

Die modifizierten Säulen werden chromatographisch im Reversed Phase Mode mit Acetonitril/Wasser (60/40;v/v) und Anthracen untersucht.

Mit in dieser Weise erhaltenen Produkten wurden folgende Trennleistungen und Peaksymmetrien erhalten

| | Trennleistung N/m | Peaksymmetrie Tusp |
|---|---|---|
| Säule 1 | 122660 | 1,03 |
| Säule 2 | 120530 | 0,94 |

### Beispiel 3:

Auf einer monolithischen Chromatographiesäule, die wie unter Beispiel 1 und 2 beschrieben hergestellt worden ist, werden basische Pharmawirkstoffe chromatographiert und mit herkömmlichen monolithischen Chromatographiesäulen, die mit PEEK ummantelt worrden sind, verglichen. Die erfindungsgemäß mit faserverstärktem PPS ummantelten Säulen zeigen deutlich bessere Symmetrieeigenschaften:

| | Amitryptilin | Procainamid |
|---|---|---|
| | N/m Tusp | N/m...................Tusp |
| Monolithische Säule RP 18e, PEEK ummantelt (herkömmlich) | n.b....................n.b.. | 18380..................3,08 |
| Monolithische Säule RP 18e, PPS ummantelt (Erfindung) | 48810.................3,58 | 46220..................1, 76 |

| | | |
|---|---|---|
| n.b. = nicht bestimmt, weil nicht auswertbar | | |

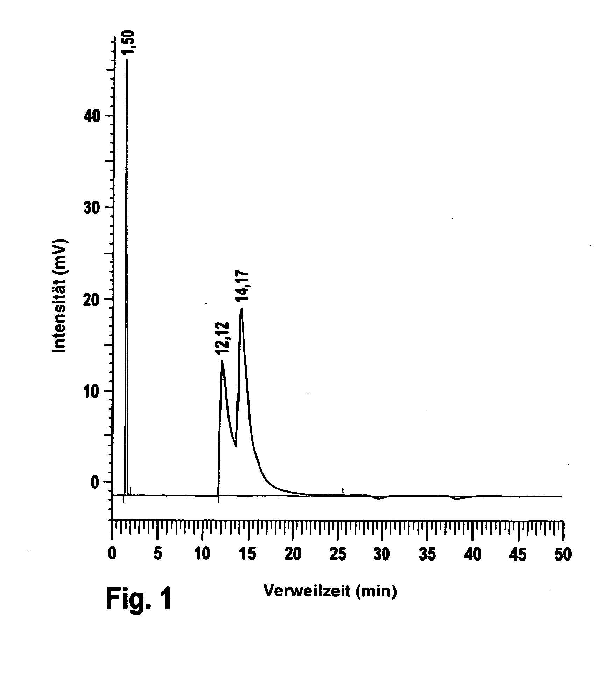

Abbildung 1 zeigt eine Auftrennung von Triptyline mit einer monolithischen Säule RP 18e, PEEK ummantelt (herkömmlich).

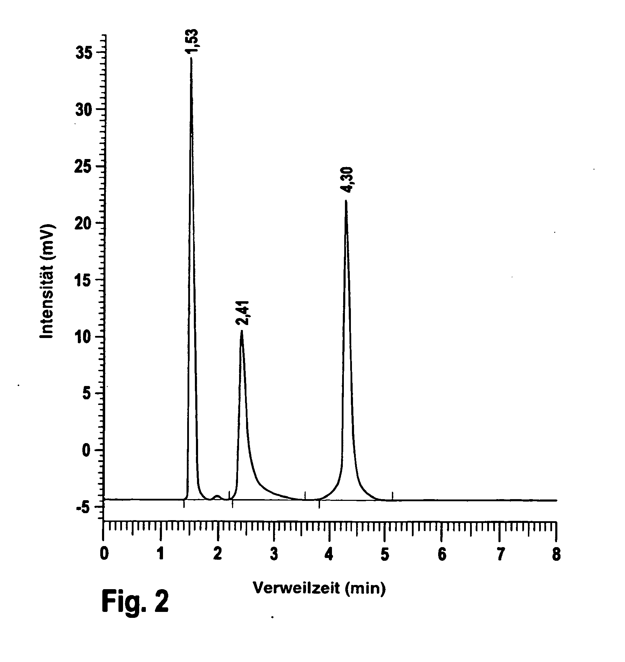

Abbildung 2 zeigt eine Auftrennung von Procainamide mit einer monolithischen Säule RP 18e, PEEK ummantelt (herkömmlich).

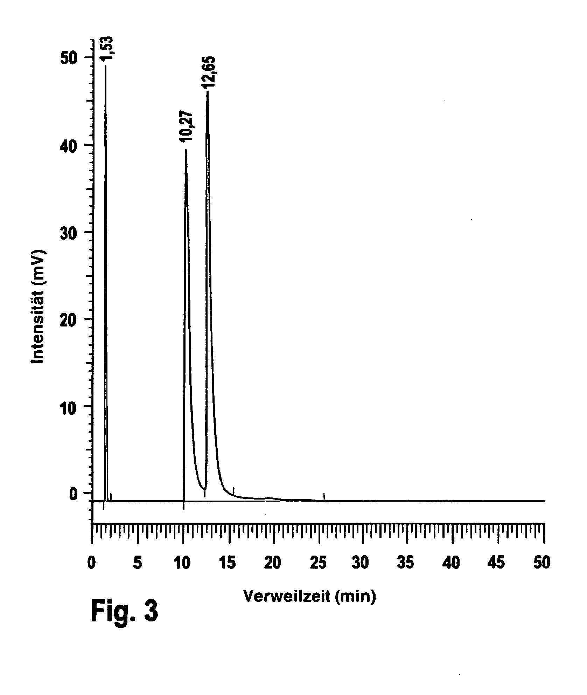

Abbildung 3 zeigt eine Auftrennung von Triptyline mit einer monolithischen Säule RP 18e, PPS ummantelt (erfindungsgemäß).

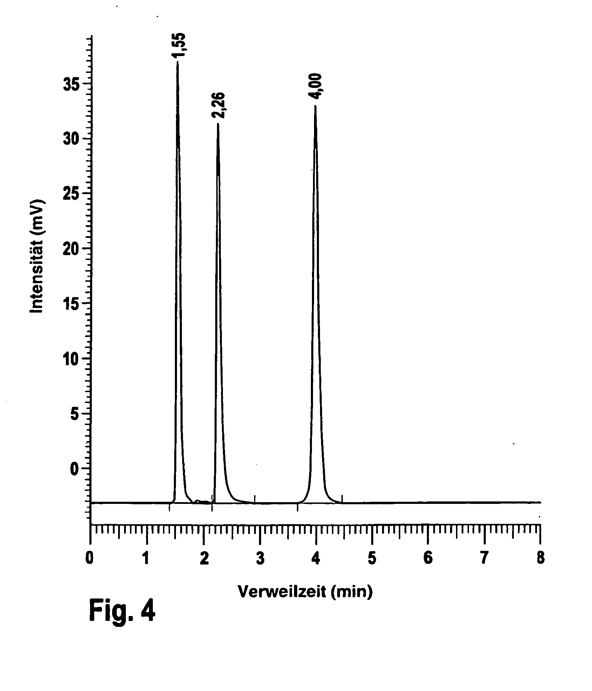

Abbildung 4 zeigt eine Auftrennung von Procainamide mit einer monolithischen Säule RP 18e, PPS ummantelt (erfindungsgemäß).

Zusammenfassend ist zu den Beispielen festzustellen, dass Substanzen mit geringerem Tailing und Fronting und somit mit verbesserten Peaksymmetrien chromatographiert werden können durch Verwendung von mit faserverstärkten PPS Rohren ummantelten monolithischen Chromatographiesäulen.

## Patentansprüche

1. Monolithischer Formkörper, der mit einem thermoplastischen Kunststoff ummantelt ist, **dadurch gekennzeichnet, dass** die Ummantelung mit Fasern verstärktes Polyphenylensulfid enthält und im geschmolzenen Zustand eine Viskosität zwischen 100 und 180 ml/10 min nach MVR-Methode aufweist.

2. Ummantelter monolithischer Formkörper nach der Anspruch 1, **dadurch gekennzeichnet, dass** die Faserverstärkung durch Kohlefasern erzeugt wird.

3. Ummantelter monolithischer Formkörper nach der Anspruch 1 oder 2, **dadurch gekennzeichnet, dass** die Ummantelung aus Polyphenylensulfid (PPS) mit einem Faseranteil von 15 bis 35 Gew.-% hergestellt ist.

4. Chromatographiesäule, aufweisend einen ummantelten monolithischen Formkörper nach einem der Ansprüche 1 bis 3.

5. Verfahren zur Herstellung eines ummantelten monolithischen Formkörpers nach einem oder mehreren der Ansprüche 1 bis 4, **dadurch gekennzeichnet, dass**
a) Polyphenylensulfid-Granulat mit Kohlefasern in einer Menge von 1 bis 50 Gew.-%, bevorzugt 15 bis 35 Gew.-%, versetzt wird und mittels Spritzgussvorrichtungen zu einem Rohr, Schlauch oder Halbschalen mit geringfügig größeren Innendurchmessern als der Durchmesser des monolithischen Formkörpers geformt wird,
b) der zu ummantelnde Formkörper in das Rohr, den Schlauch oder in zwei Halbschalen eingebracht wird,
c) das Rohr, die Halbschalen oder der Schlauch durch Aufschmelzen und Andrücken oder Aufziehen schlüssig mit der Oberfläche des Formkörpers verbunden wird.

6. Verwendung eines ummantelten monolithischen Formkörpers oder mehreren der Ansprüche 1 bis 4 zur chromatographischen Auftrennung mindestens zweier Stoffe.

## Claims

1. Monolithic moulding which is encased with a thermoplastic, **characterised in that** the casing comprises fibre-reinforced polyphenylene sulfide and has a viscosity in the molten state of between 100 and 180 ml/10 min by the MVR method.

2. Encased monolithic moulding according to Claim 1, **characterised in that** the fibre reinforcement is produced by carbon fibres.

3. Encased monolithic moulding according to Claim 1 or 2, **characterised in that** the casing is made from polyphenylene sulfide (PPS) having a fibre content of 15 to 35% by weight.

4. Chromatography column containing an encased monolithic moulding according to one of Claims 1 to 3.

5. Process for the production of an encased monolithic moulding according to one or more of Claims 1 to 4, **characterised in that**
a) carbon fibres in an amount of 1 to 50% by weight, preferably 15 to 35% by weight, are added to polyphenylene sulfide granules, and the mixture is shaped by means of injection-moulding devices to give a pipe, tube or half-shells having a slightly larger internal diameter than the diameter of the monolithic moulding,
b) the moulding to be encased is introduced into the pipe, the tube or into two half-shells,
c) the pipe, the half-shells or the tube is permanently bonded to the surface of the moulding by melting and pressing or absorption.

6. Use of an encased monolithic moulding according to one or more of Claims 1 to 4 for the chromatographic separation of at least two substances.

## Revendications

1. Moulage monolithique qui est enveloppé à l'aide d'un matériau thermoplastique, **caractérisé en ce que** l'enveloppe comprend du sulfure de polyphénylène renforcé de fibres et présente une viscosité dans l'état fondu entre 100 et 180 ml/10 mn au moyen de la méthode de débit molumétrique MVR.

2. Moulage monolithique enbeloppé selon la revendication 1, **caractérisé en ce que** le renforcement de fibres est produit au moyen de fibres de carbone.

3. Moulage monolithique enbeloppé selon la revendication 1 ou 2, **caractérisé en ce que** l'enveloppe est réalisée à partir de sulfure de polyphénylène (PPS) présentant une teneur en fibres de 15 à 35% en poids.

4. Colonne de chromatographie contenant un moulage monolithique enveloppé selon l'une des revendications 1 à 3.

5. Procédé pour la fabrication d'un moulage monolithique enveloppé selon une ou plusieurs des revendications 1 à 4, **caractérisé en ce que**
a) des fibres de carbone selon une quantité de 1 à 50% en poids, de préférence de 15 à 35% en poids, sont ajoutées à des granules de sulfure de polyphénylène et le mélange est conformé au moyen de dispositifs de moulage par injection pour obtenir un tuyau, un tube ou des demi-coques présentant un diamètre interne légèrement supérieur au diamètre du moulage monolithique,
b) le moulage à envelopper est introduit à l'intérieur du tuyau, du tube ou des deux demi-coques,
c) le tuyau, les demi-coques ou le tube est/sont lié(es) de façon permanente à la surface du moulage par fusion et pression ou absorption.

6. Utilisation d'un moulage monolithique enveloppé selon une ou plusieurs des revendications 1 à 4 pour la séparation chromatographique d'au moins deux substances.
